# EUROPÄISCHE PATENTANMELDUNG

(11) **EP 0 688 908 A1**
(43) Veröffentlichungstag der Anmeldung: **27.12.1995**
(21) Anmeldenummer: 95810404.4
(22) Anmeldetag: 15.06.1995
(51) Int. Cl.: E03B 7/07, G05D 16/10

(54) **Ventilvorrichtung**

(30) Priorität: 24.06.1994 DE 4422108
(71) Anmelder: Schenk, Rudolf, CH-5035 Unterentfelden (CH)
(72) Erfinder: Schenk, Rudolf, CH-5035 Unterentfelden (CH)
(74) Vertreter: Rottmann, Maximilian R.

(57) **Zusammenfassung**

Eine Ventilvorrichtung (19) zur Ansteuerung von parallel geschalteten Flüssigkeitsbehandlungsgeräten (80, 81, 82) weist ein Ventilgehäuse (20) mit zumindest zwei Anschlüssen in Form von Auslässen (23, 24, 25) auf. Zwei Anschlüsse (24, 25) sind sequentiell durch je einen Ventilkörper (29, 31) ansteuerbar, welche von einer Feder (30, 32) belastet und entlang eines im Ventilgehäuse (20) angeordneten Ventilraums (27) verschiebbar sind. Im Ruhezustand verschliessen die Ventilkörper (29, 31) die beiden Auslässe (24, 25). Die Ventilkörper (29, 31) sind durch einen in Abhängigkeit des Verbrauchs an behandelter Flüssigkeit entstehenden Differenzdruck zwischen den Auslässen (23, 24, 25) entgegen der Vorspannkraft der jeweiligen Feder (30, 32) verschiebbar, wodurch die Auslässe (24, 25), bei unterschiedlichen Differenzdrücken, selektiv freigegeben werden.

## Beschreibung

Die Erfindung betrifft eine Ventilvorrichtung zur Ansteuerung von parallel geschalteten Flüssigkeitsbehandlungsgeräten nach dem Oberbegriff des Anspruchs 1.

Die generelle Problematik von Flüssigkeitsbehandlungsgeräten besteht darin, dass diese üblicherweise auf einen bestimmten Nenndurchsatz ausgelegt sind. Bei zeitlich stark schwankendem Flüssigkeitsverbrauch, wie dies insbesondere auch bei Hauswasseranlagen der Fall ist, kommt es daher häufig vor, dass der Flüssigkeitsdurchsatz durch die Flüssigkeitsbehandlungsgeräte stark vom Nenndurchsatz abweicht. Dies bedeutet in der Praxis, dass die Flüssigkeitsbehandlungsgeräte oft in einen Bereich arbeiten, in dem sie einen schlechten Wirkungsgrad aufweisen. Ein weiteres Problem besteht darin, dass bei einem Flüssigkeitsdurchsatz oberhalb des Nenndurchsatzes, zusätzlich zum schlechten Wirkungsgrad, ein hoher Druckabfall im Flüssigkeitsbehandlungsgerät entsteht, was natürlich wiederum unerwünscht ist. Demzufolge müssen solche Flüssigkeitsbehandlungsgeräte so ausgelegt werden, dass deren Nenndurchsatz möglichst nahe am maximalen Flüssigkeitsverbrauch liegt.

Aus der DE-OS 43 00 585.3 ist eine Flüssigkeitsaufbereitungsanlage bekannt, welche der oben erwähnten Problematik Rechnung trägt. Die Flüssigkeitsaufbereitungsanlage ist mit einem Eingang und einem Ausgang versehen, wobei wischen dem Eingang und dem Ausgang der Anlage mehrere Flüssigkeitsbehandlungsgeräte in Parallelschaltung angeordnet sind, welche alle, ausser einem Flüssigkeitsbehandlungsgerät, jeweils eine in Reihe geschaltete Ventilvorrichtung aufweisen, die das zugehörige Flüssigkeitsbehandlungsgerät in Abhängigkeit des Flüssigkeitsverbrauchs bzw. des anstehenden Flüssigkeitsdifferenzdrucks selektiv ansteuert.

Die Ventilvorrichtung weist jeweils einen Verschlusskolben auf, mittels welchem der Auslass der Ventilvorrichtung verschliessbar ist. Um zwei von drei Flüssigkeitsbehandlungsgeräten in Abhängigkeit des anstehenden Flüssigkeitsverbrauchs ansteuern zu können, müssen also zwei Ventilvorrichtungen vorhanden sein. Obwohl eine solchermassen ausgestaltete Flüssigkeitsaufbereitungsanlage in der Praxis vorzüglich funktioniert, wäre es wünschenswert, dass die Ventilvorrichtung(en) kompakter ausgestaltet und preisgünstiger herzustellen sind. Im weiteren wäre es vorteilhaft, wenn die Anzahl der Bauteile reduziert werden könnte.

Es ist daher die Aufgabe der Erfindung, eine Ventilvorrichtung zur Ansteuerung von Flüssigkeitsbehandlungsgeräten derart zu verbessern, dass diese kompakter aufgebaut und günstiger herzustellen ist.

Diese Aufgabe wird durch die im Kennzeichen des Anspruchs 1 aufgeführten Merkmale gelöst.

Bevorzugte Ausführungsformen der Erfindung sind in den abhängigen Ansprüchen 2 bis 22 definiert.

Bei einer bevorzugten Ausführungsform der Ventilvorrichtung ist vorgesehen, dass diese einen zusätzlichen, nicht gesteuerten Auslass aufweist. Da im Normalfall eines der Flüssigkeitsbehandlungsgeräte direkt mit der Flüssigkeitszuführleitung verbunden ist, d.h. nicht verbrauchsabhängig angesteuert werden muss, kann an diesem zusätzlichen, nicht gesteuerten Auslass ein Flüssigkeitsbehandlungsgerät angeschlossen werden, welches für einen Nenndurchsatz ausgelegt ist, der dem zu erwartenden Normalfall entspricht.

Bei einer weiteren, bevorzugten Ausführungsform der Ventilvorrichtung ist vorgesehen, dass die Anschlüsse koaxial zur Längsachse des Ventilgehäuses angeordnet sind. Eine solche Ventilvorrichtung ermöglicht insbesondere dann eine vergleichsweise kompakte Bauweise, wenn mehr als drei Wasserbehandlungsgeräte anzuschliessen sind.

Im Anspruch 23 wird zudem eine Filtereinrichtung und im Anspruch 24 eine Hauswasseranlage mit einer erfindungsgemässen Ventilvorrichtung vorgeschlagen, währenddem im Anspruch 25 ein bevorzugtes Einsatzgebiet beansprucht wird.

Nachfolgend werden verschiedene Ausführungsbeispiele der Erfindung anhand von schematischen Zeichnungen näher erläutert. In den Zeichnungen zeigt:
Fig. 1 ein erstes Ausführungsbeispiel der Ventilvorrichtung in einem Längsschnitt;
Fig. 2 ein zweites Ausführungsbeispiel der Ventilvorrichtung in einem Längsschnitt;
Fig. 3 ein drittes Ausführungsbeispiel der Ventilvorrichtung in einem Längsschnitt;
Fig. 4 ein viertes Ausführungsbeispiel der Ventilvorrichtung in einem Längsschnitt;
Fig. 5 ein fünftes Ausführungsbeispiel der Ventilvorrichtung in einer Draufsicht;
Fig. 6 das fünfte Ausführungsbeispiel der Ventilvorrichtung in einem Längsschnitt entlang der Linie X-X in Fig.5;
Fig. 7 eine erste, schematisch dargestellte Flüssigkeitsaufbereitungsanlage mit einer Ventilvorrichtung gemäss Fig. 2, und
Fig. 8 eine zweite, schematisch dargestellte Flüssigkeitsaufbereitungsanlage mit einer Ventilvorrichtung gemäss Fig. 4.

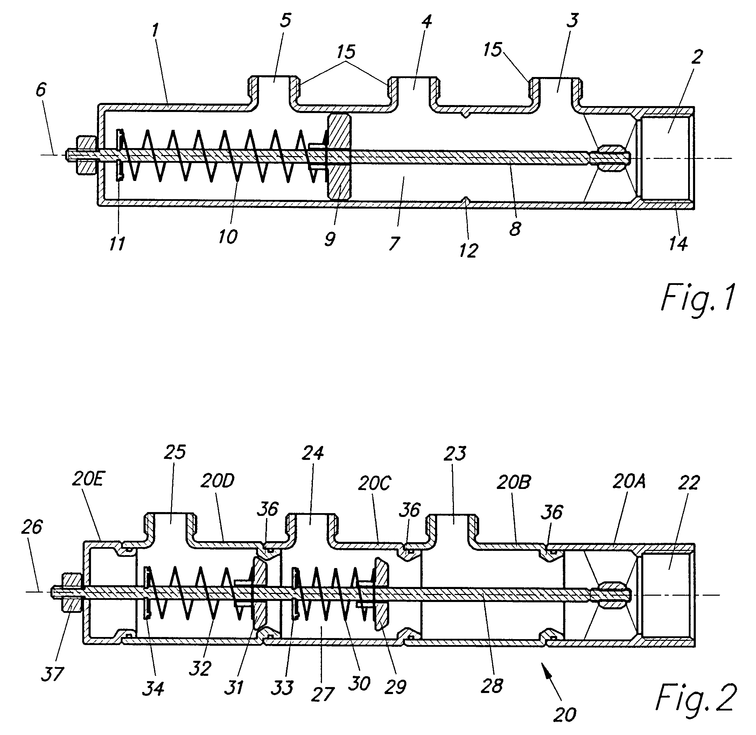

Fig. 1 zeigt in schematischer Darstellung einen Längsschnitt durch ein erstes Ausführungsbeispiel einer Ventilvorrichtung. Ein Ventilgehäuse 1 weist einen Einlass 2 und drei Anschlüsse 3, 4, 5 in Form von Auslässen auf. Das Ventilgehäuse 1 besitzt einen zentral angeordneten Ventilraum 7, in welchem ein Ventilkörper 9 längsverschiebbar aufgenommen ist. Von den drei Anschlüssen 3, 4, 5 sind deren zwei durch den Ventilkörper 9 ansteuerbar, indem diese durch den Ventilkörper 9 gegenüber dem Einlass 2 geöffnet oder verschlossen werden. Die beiden ansteuerbaren Anschlüsse 4, 5 münden entlang des Verschiebewegs des Ventilkörpers 9 in den Ventilraum 7. Zur Führung des Ventilkörpers 9 ist eine zentral angebrachte Führungsstange 8 vorgesehen, welche an beiden Enden ein der Befestigung dienendes Aussengewinde aufweist. Der Ventilkörper 9 ist mittels einer zentralen Bohrung auf die Führungsstange 8 aufgesetzt und als Schiebeventil ausgebildet. Um den Ventilkörper 9 in einer definierten Ruhestellung zu halten, ist dieser mittels einer an der Führungsstange 8 über eine Scheibe 11 abgestützten Feder 10 vorgespannt. Der Einlass 2 ist koaxial zum Ventilraum des Ventilgehäuses 1 angeordnet, währenddem die drei Auslässe 3, 4, 5 radial in den Ventilraum 7 münden. Auf der dem Einlass 2 gegenüberliegenden Seite ist das Ventilgehäuse 1 verschlossen.

Um den Weg des Ventilkörpers 9 im Ventilraum 7 gegen den Einlass 2 hin zu begrenzen, ist zwischen dem vordersten 3 und dem mittleren Auslass 4 ein Anschlag 12 vorgesehen, an welchen sich der durch die Feder 10 vorgespannte Ventilkörper 9 in seiner Ruheposition anlegt. In der Ruheposition des Ventilkörpers 9 wird der Ventilraum 7 zwischen dem vorderen 3 und dem mittleren Auslass 4 durch den Ventilkörper 9 abgesperrt. Dadurch sind der mittlere 4 und der hintere Auslass 5 gegenüber dem Einlass 2 verschlossen. Am Einlass 2 ist das Ventilgehäuse 1 mit einem Innengewinde 14 zum Anschluss desselben an eine Flüssigkeitsleitung versehen, währenddem die Auslässe 3, 4, 5 jeweils ein Aussengewinde 15 zum Befestigen von abgehenden Leitungen oder Geräten aufweisen. Der Ventilkörper 9 selber ist in einer Mittelstellung, in welcher der mittleren Auslass 4 offen ist, eingezeichnet. Diese Mittelstellung wird vom Ventilkörper 9 natürlich nur dann eingenommen, wenn dieser durch eine vom Flüssigkeitsdruck ausgeübte Kraft verschoben wird.

Zu erwähnen ist, dass der Abstand zwischen den Anschlüssen nicht gleich gross sein muss, da auf diese Weise einerseits unterschiedlichen Durchmessern von angeschlossenen Flüssigkeitsbehandlungsgeräten Rechnung getragen werden kann. Andererseits ist dadurch auch der für die Ansteuerung des jeweiligen Anschlusses notwendige Verschiebeweg des Ventilkolbens unterschiedlich, was bedeutet, dass der für das Öffnen eines Anschlusses notwendige Differenzdruck der Flüssigkeit auf diese Weise beeinflussbar ist. Letzterer Effekt kann auch durch eine nichtlineare Federkennlinie erzeugt werden.

Aus der Fig. 2 ist eine zweite Ausführungsform der Ventilvorrichtung ersichtlich. Das Ventilgehäuse 20 wird durch fünf einzelne Module 20A, 20B, 20C, 20D, 20E gebildet, wobei das Anschlussmodul 20A und das Endmodul 20E gegenüber den dazwischen liegenden Modulen 20B, 20C, 20D unterschiedlich ausgestaltet sind. Um die einzelnen Module 20A, 20B, 20C, 20D, 20E zusammenfügen zu können, weisen diese bis auf das Anschlussmodul 20A im Bereich der dem Einlass 22 zugewandten Endseite je einen abgesetzten, umlaufenden Kragen 36 auf, dessen Aussendurchmesser mit dem Innendurchmesser der Module 20A, 20B, 20C, 20D, 20E korrespondiert. Um die Module 20A, 20B, 20C, 20D, 20E gegeneinander bzw. den Ventilraum 27 nach aussen hin abzudichten, weisen diese im Bereich des Kragens 36 je einen Dichtring auf. Die einzelnen Module 20A, 20B, 20C, 20D, 20E werden durch eine Führungsstange 28 zusammengehalten, welche auf der einen Seite in ein Innengewinde des Anschlussmoduls 20A eingeschraubt ist, und welche am anderen Ende mittels einer am Endmodul 20E angreifenden Mutter 37 die Module 20A, 20B, 20C, 20D, 20E zusammenhält, so dass diese eine Einheit bilden. Auf die Führungsstange 28 sind zwei Ventilkörper 29, 31 aufgesetzt, welche von je einer an der Führungsstange 28 über eine Scheibe 33, 34 abgestützten Feder 30, 32 vorgespannt und entlang des Ventilraums 27 verschiebbar sind. Die Ventilkörper 29, 31 sind als Tellerventile ausgebildet und dichten den Ventilraum jeweils am Kragen 36 der Module 20C und 20DE ab, welche im Bereich der Dichtfläche als Ventilsitz wirken bzw. ausgebildet sind. Durch zwei in Reihe geschaltete Ventilkörper 29, 31 ist der am zweiten Ventilkörper 31 anliegende Differenzdruck um den im Bereich des ersten Ventilkörpers 29 entstehenden Druckabfall tiefer.

Nebst dem Ventilgehäuse 20 sind auch die Ventilkörper 29, 31 mit den zugehörigen Federn 30, 32 sowie die Führungsstange 28 als Module ausgebildet, so dass die Ventilvorrichtung durch das Zusammenfügen einer bestimmten Anzahl Module, einer beliebigen Anzahl von anzusteuernden Wasserbehandlungsgeräten angepasst werden kann. Für diese Ausführungsvariante wäre eine Feder wünschenswert, welche den Ventilkörper bis zu einer vorbestimmten Kraft in der Verschlussposition hält. Nach dem Überschreiten dieser Verschluss-Kraft sollte der Ventilkörper möglichst ohne weiteren Kraftaufwand entegegen der Federvorspannung verschiebbar sein um einen möglichst grossen Durchlass-Querschnitt freizugeben.

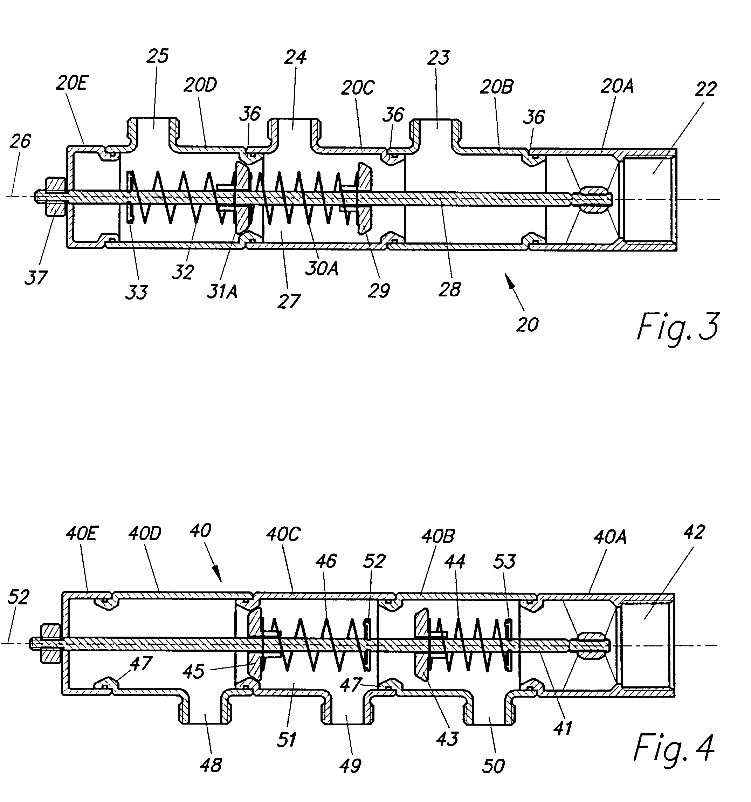

Aus der Fig. 3 ist eine dritte Ausführungsform der Ventilvorrichtung ersichtlich, deren einziger, wesentlicher Unterschied gegenüber der Fig. 2 darin besteht, dass die den näher am Einlass 22 angeordneten Ventilkörper 29 vorspannende Feder 30A am dahinter liegenden Ventilkörper 31A abgestützt ist.

Währenddem die in den Fig. 1 bis 3 umschriebenen Ventilvorrichtungen bevorzugt vor den durch letztere anzusteuernden Flüssigkeitsbehandlungsgeräten angeordnet werden, eignet sich das nachfolgend in Fig. 4 dargestellte, vierte Ausführungsbeispiel der Ventilvorrichtung bevorzugt zur Anordnung nach den Flüssigkeitsbehandlungsgeräten.

Der grundsätzliche Unterschied der in Fig. 4 dargestellten Ventilvorrichtung gegenüber derjenigen in Fig. 2 besteht darin, dass die drei Anschlüsse 48, 49, 50 als Einlässe ausgebildet sind, währenddem ein gemeinsamer Auslass 42 vorgesehen ist. Das Ventilgehäuse 40 ist wiederum aus einzelnen Modulen 40A, 40B, 40C, 40D, 40E aufgebaut, währendem die beiden Ventilkörper 43, 45 so angeordnet sind, dass sie das Ventilgehäuse 40 jeweils am Kragen 47 abdichten, wodurch zwei der drei Anschlüsse 48, 49 durch je einen Ventilkörper 43, 45 ansteuerbar sind. Der Auslass 42 ist koaxial zur Längsachse 51 angeordnet, währenddem die drei Einlässe 48, 49, 50 unter einem rechten Winkel zur Längsachse 52 des Ventilkörpers 40 verlaufen. Die prinzipielle Wirkungsweise dieser Ventilvorrichtung ist mit den in den Fig. 1 bis 3 umschriebenen Ventilvorrichtungen vergleichbar, so dass an dieser Stelle auf weitergehende Erläuterungen verzichtet werden kann.

Natürlich sind auch Ausführungen von Ventilvorrichtung vorgesehen, welche über eine Mehrzahl von Einlässen und einen gemeinsamen Auslass gemäss der Fig. 4 verfügen, welche jedoch mit einem Ventilkörper gemäss der Fig. 1 oder mit mehreren Ventilkörpern gemäss der Fig. 3 versehen sind.

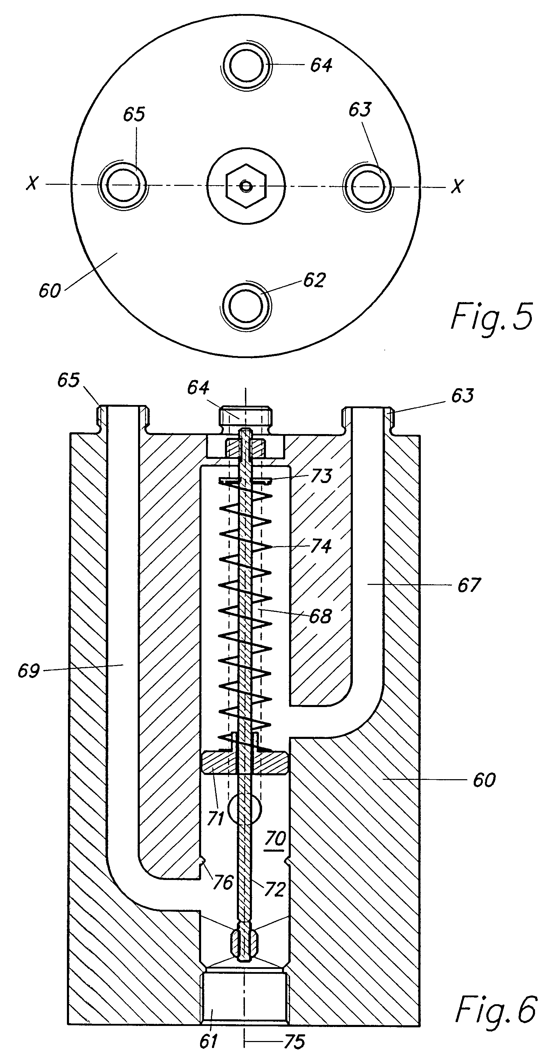

Fig. 5 zeigt ein weiteres Ausführungsbeispiel der Ventilvorrichtung in einer Draufsicht, währenddem in der Fig. 6 dieselbe Ventilvorrichtung in einem Längsschnitt dargestellt ist. In einem Ventilgehäuse 60 ist wiederum zentral ein Ventilraum 70 angeordnet, in welchem ein Ventilkörper 71 längsverschiebbar aufgenommen ist. Das Ventilgehäuse 60 weist einen koaxial zur Längsachse 75 angeordneten Einlass 61 und vier Anschlüsse 62, 63, 64, 65 in Form von Auslässen auf, welche symmetrisch um die Längsachse 75 herum angeordnet sind. Der Ventilkörper 71 ist mittels einer zentralen Bohrung auf eine Führungsstange 72 aufgesetzt und an dieser mittels einer an der Führungsstange 72 über eine Scheibe 73 abgestützten Feder 74 vorgespannt. Die vier Anschlüsse 62, 63, 64, 65 münden jeweils über durch das Ventilgehäuse 60 führende Hohlräume 67, 68, 69, entlang des Verschiebewegs des Ventilkörpers 71, radial, und in Umfangsrichtung des Ventilraums 70 um jeweils 90° versetzt, in den Ventilraum 70. Zwischen dem ersten und zweiten in den Ventilraum 70 mündenden Hohlraum 68, 69 der Anschlüsse 64, 65 ist ein Anschlag 76 vorgesehen, welcher den Verschiebeweg des Ventilkolbens 71 nach vorne gegen den Einlass 61 hin begrenzt. Anstelle von vier Anschlüssen 62, 63, 64, 65 kann natürlich eine davon abweichende Anzahl von Anschlüssen vorgesehen sein. Der Vorteil dieser Ausführungsform gegenüber den davor beschriebenen ist darin zu sehen, dass diese Ventilvorrichtung sehr kompakte Ausmasse, insbesondere bezüglich der Längsausdehnung, aufweist, und dies insbesondere auch dann, wenn vier und mehr Anschlüsse 62, 63, 64, 65 vorgesehen sind. Auch bei diesem Ausführungsbeispiel ist es denkbar, dass der Abstand zwischen den aus dem Ventilraum 70 führenden Hohlräumen 67, 68, 69 variieren kann.

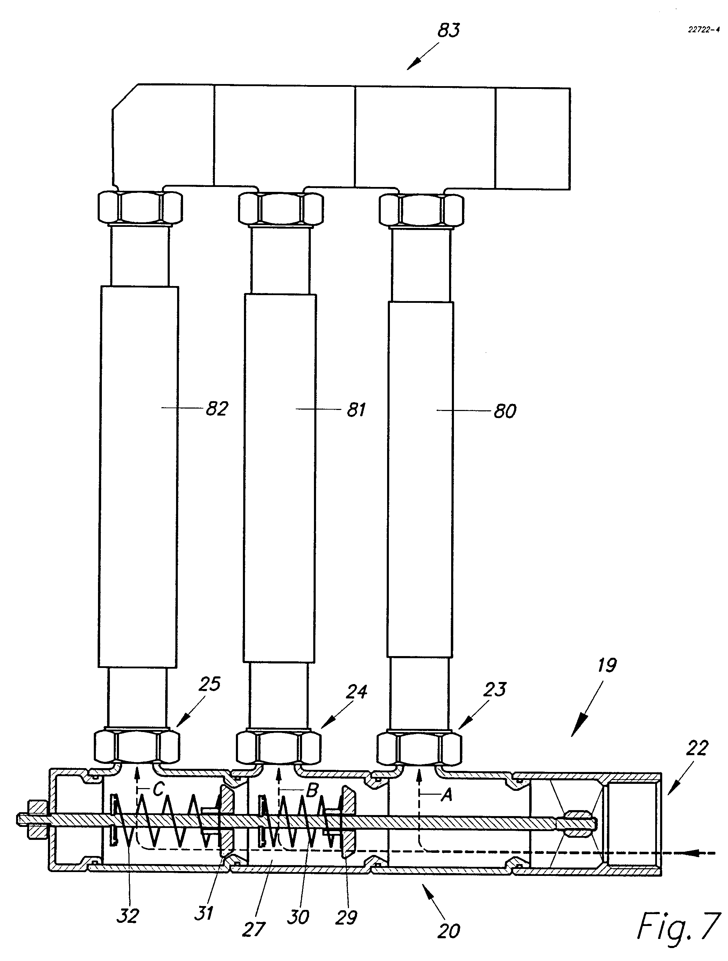

Aus der Fig. 7 ist eine Flüssigkeitsaufbereitungsanlage ersichtlich, anhand derer die prinzipielle Funktionsweise einer erfindungsgemässen Ventilvorrichtung näher erläutert werden soll. Die Flüssigkeitsaufbereitungsanlage besteht im wesentlichen aus der Ventilvorrichtung 19, drei Flüssigkeitsbehandlungsgeräten 80, 81, 82 sowie einem Sammelkollektor 83. Die Ventilvorrichtung 19 entspricht derjenigen gemäss Fig. 2 und ist im Längsschnitt dargestellt, währenddem die drei Flüssigkeitsbehandlungsgeräte 80, 81, 82 sowie der Sammelkollektor 83 schematisch und in einer Draufsicht dargestellt sind. Die drei Flüssigkeitsbehandlungsgeräte 80, 81, 82 sind parallel zueinander angeordnet, weisen unterschiedliche Nenngrössen auf und sind an je einem als Auslass 23, 24, 25 ausgebildeten Anschluss der Ventilvorrichtung 19 angeschlossen. Am ersten, nicht gesteuerten Auslass 23 ist dasjenige Flüssigkeitsbehandlungsgerät 80 mit dem kleinsten Nenndurchsatz angeschlossen, währenddem am mittleren Auslass 24 das mit einem mittleren Nenndurchsatz versehene Flüssigkeitsbehandlungsgerät 81 angeschlossen ist. Am letzten Auslass 25 ist das Flüssigkeitsbehandlungsgerät 82 mit dem grössten Nenndurchsatz angeschlossen. Am Ausgang der Flüssigkeitsbehandlungsgeräte 80, 81, 82 ist der Sammelkollektor 83 angeordnet, in welchem die aufgeteilten Flüssigkeitsströme zusammengeführt werden. Drei von einem gemeinsamen Einlass ausgehende, in die drei Auslässe 23, 24, 25 mündende Flüssigkeitsströme sind mittels unterbrochenen Linien A, B, C angedeutet. Der im nicht gesteuerten, ersten Auslass 23 mündende Flüssigkeitsstrom ist mit A bezeichnet, währenddem der durch den vorderen Ventilkörper 29 steuerbare Flüssigkeitsstrom, der im mittleren Auslass 24 mündet, mit B bezeichnet ist. Der dritte, durch den hinteren Ventilkörper 31 steuerbare Flüssigkeitsstrom, der im hintersten Auslass 25 mündet, ist mit C bezeichnet. Zu erwähnen ist ausserdem, dass anstelle von Flüssigkeitsbehandlungsgeräten mit unterschiedlichen Nenndurchsätzen natürlich auch solche mit gleichen Nenndurchsätzen an einer erfindungsgemässen Ventilvorrichtung angeschlossen werden können.

Eine solche Flüssigkeitsaufbereitungsanlage kann beispielsweise in Hauswasseranlagen eingesetzt werden wobei als Flüssigkeitsbehandlungsgeräte beispielsweise physikalisch wirkende Entkalkungsgeräte 80, 81, 82 zur Reduktion der Wasserhärte zum Einsatz kommen können. Die Flüssigkeitsaufbereitungsanlage wird nach einem am Eingang der Hauswasseranlage üblicherweise vorhandenen Filter angeschlossen, währenddem der Auslass der Flüssigkeitsaufbereitungsanlage zu den Verbrauchern führt. Anhand des Einsatzes in einer Hauswasseranlage soll die Funktionsweise der Flüssigkeitsaufbereitungsanlage nachfolgend näher erläutert werden.

Wird durch an der Hauswasseranlage angeschlossene Verbraucher nur eine geringe Menge an Wasser verbraucht, indem beispielsweise nur ein Wasserhahn geöffnet ist, so strömt das Brauchwasser durch das erste, mit dem kleinsten Nenndurchsatz versehene Entkalkungsgerät 80, da der mittlere Auslass 24 durch den ersten Ventilkörper 29 und der hintere Auslass 25 durch beide Ventilkörper 29, 31 verschlossen ist.

Das erste Entkalkungsgerät 80 besitzt einen bestimmten Nenndurchsatz und dadurch einen definierten Querschnitt. Bei geschlossenen Ventilkörpern 29, 31 ist dieser Querschnitt massgebend für einen bestimmten Druckabfall zwischen Einlass und Auslass des ersten Entkalkungsgeräts 80, da sämtliches Brauchwasser durch dieses erste Gerät 80 fliesst. Der Druckabfall ist gleichzeitig proportional zur entstehenden Druckdifferenz zwischen der Vorder- und Rückseite des ersten Ventilkörpers 29. Diese Druckdifferenz entspricht im übrigen auch der Druckdifferenz zwischen dem ersten und zweiten Auslass 23, 24. Solange die durch den Differenzdruck des Wassers auf den ersten Ventilkörper 29 ausgeübte Kraft kleiner als die Vorspannkraft der zugeordneten Feder 30 ist, liegt dieser Ventilkörper 29 am Ventilsitz an, so dass der erste Ventilkörper 29 sowohl den mittleren 24 als auch den hinteren Auslass 25 verschliesst.

Steigt nun der Wasserverbrauch an, so steigt damit auch der Druckabfall im ersten Entkalkungsgerät 80 an. Da alle drei Entkalkungsgeräte 80, 81, 82 parallel geschaltet sind, herrscht auf der Rückseite der beiden Ventilkörper 29, 31, im Ruhezustand derselben, zumindest annähernd der gleiche Druck wie am Ausgang des ersten Entkalkungsgerätes 80. Somit besteht zwischen der Vorder- und der Rückseite des ersten Ventilkörpers 29 eine Druckdifferenz, welche dem Druckabfall im vom Wasser durchflossenen, ersten Entkalkungsgerät 80 entspricht. Durch diesen Druckunterschied steigt mit zunehmendem Wasserverbrauch die auf der Vorderseite durch die Flüssigkeit auf den vorderen Ventilkörper 29 ausgeübte Kraft kontinuierlich an. Wird dabei ein bestimmter, durch die Federvorspannung definierter Grenzwert überschritten, so wird der Ventilkörper 29 entgegen der Vorspannkraft der Feder 30 verschoben und somit der mittlere Auslass 24 freigegeben. Das bedeutet, dass bei Erreichen einer bestimmten Durchflussmenge, und dadurch eines bestimmten Druckabfalls im ersten Entkalkungsgerät 80, der erste Ventilkörper 29 den mittleren Auslass 24 freigibt, wodurch das mittlere Entkalkungsgerät 81 ebenfalls vom Wasser durchströmt wird.

Steigt der Flüssigkeitsverbrauch weiter an, so steigt dadurch auch der Differenzdruck zwischen Vorder- und Rückseite des hinteren Ventilkörpers 31 und damit zwischen dem mittleren und dem hinteren Auslass 24, 25 an, so dass ab einem bestimmten Flüssigkeitsverbrauch auch der hintere Ventilkörper 31 verschoben wird und den hinteren Auslass 25 öffnet, wodurch das dritte Entkalkungsgerät 82 ebenfalls vom Wasser durchströmt wird, so dass alle drei Entkalkungsgeräte 80, 81, 82 gleichzeitig im Einsatz stehen. Bei einem Rückgang des Wasserverbrauchs kehrt sich das Ganze um, indem zuerst der hintere 31 und danach allenfalls auch der vordere Ventilkörper 29 den Durchlass im Ventilraum des Ventilgehäuses 20 und damit den zugeordneten Auslass verschliesst.

Eine solchermassen ausgebildete Anlage hat den grossen Vorteil, dass unabhängig vom Flüssigkeitsverbrauch ein guter Wirkungsgrad der Entkalkungsgeräte 80, 81, 82 gewährleistet ist, da die pro Zeiteinheit durch die Geräte 80, 81, 82 strömende Wassermenge in bestimmten Grenzen gehalten werden kann, in denen die Geräte 80, 81, 82 optimal arbeiten. Die Nenngrössen der einzelnen Geräte 80, 81, 82 und die Ansprechkräfte der Ventilkörper 29, 31 können dabei individuell auf die Charakteristik der entsprechenden Anlage bzw. der daran angeschlossenen Verbraucher abgestimmt werden.

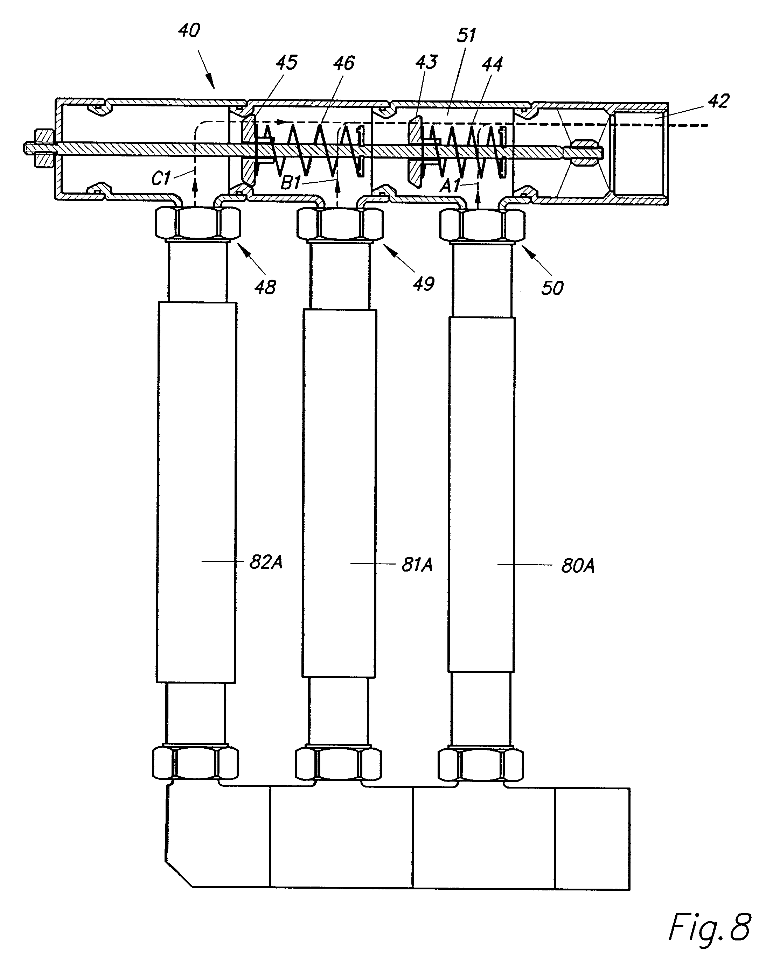

Fig. 8 zeigt schliesslich noch eine zweite, schematisch dargestellte Flüssigkeitsaufbereitungsanlage, welche mit einer Ventilvorrichtung gemäss Fig. 4 versehen ist. Der wesentliche Unterschied gegenüber der in Fig. 5 dargestellten Flüssigkeitsaufbereitungsanlage besteht darin, dass die Ventilvorrichtung am Auslass der Flüssigkeitsbehandlungsgeräte 80A, 81A, 82A angeschlossen ist.

Die Wirkungsweise stellt sich im wesentlichen gleich wie bei der in Fig. 7 umschriebenen Anlage dar, indem das erste Flüssigkeitsbehandlungsgerät 80A an einem nicht gesteuerten Einlass 50 der Ventilvorrichtung angeschlossen ist, währenddem die beiden anderen Flüssigkeitsbehandlungsgeräte 81A, 82A je an einem gesteuerten Einlass 48, 49 angeschlossen sind. Ob die Flüssigkeitsbehandlungsgeräte der Ventilvorrichtung vor- oder nachgeschaltet sind, ist hydraulisch unerheblich. Der einzige wesentliche Unterschied kann allenfalls darin bestehen, dass bei nachgeschalteten Flüssigkeitsbehandlungsgeräten 80A, 81A, 82A das aus letzteren fliessende, physikalisch behandelte Wasser verwirbelt wird. Ausschlaggebend für das Vor- oder Nachschalten der Ventilvorrichtung dürften viel mehr die Platzverhältnisse am Einbauort sein.

Modular aufgebaute Ventilvorrichtungen, wie sie in den Fig. 2, 3 und 4 umschrieben sind, können natürlich auch mehr als zwei steuerbare Anschlüsse aufweisen. Dazu braucht lediglich die gewünschte Anzahl Module 20B, 20C, 20D (Fig.2) zusammengefügt zu werden, welche dann von einer mit der Baugrösse des so gebildeten Ventilgehäuses korrespondierenden Führungsstange zusammengehalten werden. Auf die Führungsstange wird zuvor noch die gewünschte Anzahl Ventilkörper aufgesetzt und diese durch je eine zugeordnete Feder vorgespannt. Natürlich kann auch eine nach der Fig. 1 ausgebildete Ventilvorrichtung so ausgestaltet werden, dass diese eine beliebige Anzahl gesteuerter Auslässe aufweist.

Eine Ventilvorrichtung der gattungsgemässen Art kann beispielsweise auch so ausgestaltet werden, dass diese direkt am Auslass eines in Hauswasseranlagen zwangsläufig vorhandenen Schmutzfilters angeflanscht werden kann. Sofern die Ventilvorrichtung sehr kompakt ausgebildet wird, könnte eine weitere Ausbildung derselben darin bestehen, dass die Ventilvorrichtung direkt in das Filtergehäuse integriert wird.

Eine nichtlineare Kennlinie der Feder kann dann von Vorteil sein,

Soll die Ventilvorrichtung äusserst kompakt ausgebildet werden, indem diese beispielsweise in ein Filtergehäuse integriert wird, so können die Auslässe der Ventilvorrichtung sehr nahe beieinander angeordnet und mittels eines daran angeordneten Verteilerstücks auf den für die Verbindung mit den Wasserbehandlungsgeräten notwendigen Abstand gebracht werden.

Zu erwähnen ist schliesslich, dass die vorgängig umschriebenen Ventilvorrichtungen lediglich als mögliche Ausführungsbeispiele anzusehen sind, dass jedoch noch eine Vielzahl von anderen Ausführungsformen denkbar ist.

## Patentansprüche

1. Ventilvorrichtung zur Ansteuerung von parallel geschalteten Flüssigkeitsbehandlungsgeräten (80, 81, 82; 80A, 81A, 82A) in Abhängigkeit des Gesamtverbrauchs von behandelter Flüssigkeit, mit einem einen Ventilraum (27; 51) definierenden Ventilgehäuse (20; 40) mit einer Mehrzahl von Anschlüssen (23, 24, 25; 48, 49, 50), welche als Auslässe oder Einlässe ausgebildet sind, wobei zumindest zwei Anschlüsse (24, 25; 48, 49) durch zumindest einen von einer Feder (30, 32; 44, 46) vorgespannten, durch die Flüssigkeit im Ventilraum (27; 51) verschiebbaren Ventilkörper (29, 31; 43, 45) ansteuerbar sind, dadurch gekennzeichnet, dass die ansteuerbaren Anschlüsse (24, 25; 48, 49) im wesentlichen radial in den Ventilraum (27; 51) münden, und dass der/die Ventilkörper (29, 31; 43, 45) im Ventilraum (27; 51) derart verschiebbar angeordnet ist/sind, dass bei ansteigendem Differenzdruck zwischen den Anschlüssen (23, 24, 25; 48, 49, 50) sequentiell eine wachsende Anzahl der Anschlüsse (24, 25; 48, 49) öffnet (Fig. 7; 8).

2. Ventilvorrichtung nach Anspruch 1, dadurch gekennzeichnet, dass ein weiterer, nicht ansteuerbarer und stets offener Anschluss (3; 23; 50; 65) vorgesehen ist.

3. Ventilvorrichtung nach Anspruch 1 oder 2, dadurch gekennzeichnet, dass der Ventilraum (7; 27; 51; 70) zentral im Ventilgehäuse (1; 20; 40; 60) angeordnet und der/die Ventilkörper (9; 29, 31; 43, 45; 71) längsverschiebbar darin aufgenommen ist/sind.

4. Ventilvorrichtung nach einem der vorhergehenden Ansprüche, dadurch gekennzeichnet, dass ein einzelner Ventilkörper (9; 71) vorgesehen ist, und dass die ansteuerbaren Anschlüsse (4, 5; 62, 63, 64, 65) entlang des Verschiebewegs des Ventilkörpers (9; 71) in den Ventilraum (7; 70) münden (Fig. 1; 6).

5. Ventilvorrichtung nach einem der vorhergehenden Ansprüche, dadurch gekennzeichnet, dass die ansteuerbaren Anschlüsse (4, 5; 24, 25; 48, 49) in einer gemeinsamen, durch die Längsachse (6; 26; 52) des Ventilgehäuses verlaufenden Ebene angeordnet sind (Fig. 1 bis 4, 7 und 8).

6. Ventilvorrichtung nach einem der Ansprüche 1 bis 4, dadurch gekennzeichnet, dass die Anschlüsse (62, 63, 64, 65) koaxial zur Längsachse (75) des Ventilgehäuses (60) angeordnet sind (Fig. 5, 6).

7. Ventilvorrichtung nach Anspruch 6, dadurch gekennzeichnet, dass die Anschlüsse (62, 63, 64, 65) über durch das Ventilgehäuse (60) führende Hohlräume (67, 68, 69) mit dem Ventilraum (70) verbunden sind, und dass die Hohlräume (67, 68, 69) radial in den Ventilraum (70) münden (Fig.6).

8. Ventilvorrichtung nach einem der Ansprüche 1 bis 6, dadurch gekennzeichnet, dass drei Anschlüsse (3, 4, 5; 23, 24, 25; 48, 49, 50) vorgesehen sind, wovon zwei (4, 5; 24, 25; 48, 49) durch zumindest einen Ventilkörper (9; 29, 31; 43, 45) ansteuerbar sind und wobei der dritte Anschluss (3; 23; 50) stets geöffnet ist (Fig. 1 bis 4, 7 und 8).

9. Ventilvorrichtung nach einem der vorhergehenden Ansprüche, dadurch gekennzeichnet, dass ein für alle Anschlüsse (23, 24, 25) gemeinsamer Einlass (22) vorgesehen ist, so dass die Ventilvorrichtung in Strömungsrichtung der Flüssigkeit vor den Flüssigkeitsbehandlungsgeräten (80, 81, 82) anzuordnen ist (Fig. 7).

10. Ventilvorrichtung nach einem der Ansprüche 1 bis 8, dadurch gekennzeichnet, dass ein für alle Anschlüsse (48, 49, 50) gemeinsamer Auslass (42) vorgesehen ist, so dass die Ventilvorrichtung in Strömungsrichtung der Flüssigkeit nach den Flüssigkeitsbehandlungsgeräten (80A, 81A, 82A) anzuordnen ist (Fig. 8).

11. Ventilvorrichtung nach einem der vorhergehenden Ansprüche, dadurch gekennzeichnet, dass ein Schiebeventil (9; 71) vorgesehen ist, mittels welchem die Anschlüsse (4, 5; 62, 63, 64) sequentiell ansteuerbar sind, indem die Ventilkammer (7; 70) durch das Schiebeventil (9; 71) vor einem Anschluss (4, 5) bzw. einem aus der Ventilkammer führenden Hohlraum (67, 68) des zugehörigen Anschlusses 63, 64) verschliessbar ist (Fig. 1; 6).

12. Ventilvorrichtung nach einem der Ansprüche 1 bis 5 oder 8 bis 10, dadurch gekennzeichnet, dass die Ventilkörper (29, 31; 43, 45) als Tellerventile ausgebildet sind, und dass jedem Tellerventil ein im Innern des Ventilgehäuses (20; 40) angeordneter Ventilsitz (36; 47) zugeordnet ist, an welchem der jeweilige Anschluss (24, 25; 48, 49) durch das Tellerventil (29, 31; 43, 45) verschliessbar ist, wobei die Anzahl der Ventilkörper (29, 31; 43, 45) der Anzahl der ansteuerbaren Anschlüsse (24, 25; 48, 49) entspricht (Fig.2 bis 4).

13. Ventilvorrichtung nach Anspruch 9, soweit dieser auf einen der Ansprüche 1 bis 5, 7 oder 8 rückbezogen ist, dadurch gekennzeichnet, dass der Einlass (2; 22) koaxial zur Längsachse (6; 26) des Ventilraums (7; 27) angeordnet ist, und dass die Auslässe (3, 4, 5; 23, 24, 25) unter einem rechten Winkel zur Längsachse (6; 26) des Ventilkörpers (1; 20) verlaufen (Fig. 1 bis 3).

14. Ventilvorrichtung nach Anspruch 10, soweit dieser auf einen der Ansprüche 1 bis 4, 6 oder 7 rückbezogen ist, dadurch gekennzeichnet, dass der Auslass (42) koaxial zur Längsachse (52) des Ventilgehäuses (40) angeordnet ist, und dass die Einlässe (48, 49, 50) unter einem rechten Winkel zur Längsachse (52) des Ventilkörpers (40) verlaufen (Fig.4).

15. Ventilvorrichtung nach einem der Ansprüche 1 bis 5 oder 8 bis 14, dadurch gekennzeichnet, dass das Ventilgehäuse (20, 40) aus einzelnen Modulen (20A, 20B, 20C, 20D, 20E; 40A, 40B, 40C, 40D, 40E) aufgebaut ist (Fig. 2 bis 4).

16. Ventilvorrichtung nach Anspruch 15, dadurch gekennzeichnet, dass einzelne Module (20B, 20C, 20D, 20E; 40A, 40B, 40C, 40D) im Bereich der einen Endseite einen abgesetzten, umlaufenden Kragen (36; 47) aufweisen, dessen Aussendurchmesser mit dem Innendurchmesser der Module (20A, 20B, 20C, 20D, 20E; 40A, 40B, 40C, 40D, 40E) korrespondiert, und dass die gegen das Innere des Moduls (20A, 20B, 20C, 20D, 20E; 40A, 40B, 40C, 40D, 40E) gerichtete Fläche des Kragens (36; 47) als Dichtfläche für ein Tellerventil (29, 31; 43, 45) ausgebildet ist (Fig. 2 bis 4).

17. Ventilvorrichtung nach einem der vorhergehenden Ansprüche, dadurch gekennzeichnet, dass eine zentrale, der Führung des/der Ventilkörper(s) (9; 29, 31; 43, 45; 71) dienende Führungsstange (8; 28; 41; 72) vorgesehen ist.

18. Ventilvorrichtung nach Anspruch 17, soweit dieser auf Anspruch 15 oder 16 rückbezogen ist, dadurch gekennzeichnet, dass die einzelnen Module (20A, 20B, 20C, 20D, 20E; 40A, 40B, 40C, 40D, 40E) durch die Führungsstange (28; 41) gegeneinander fixiert sind (Fig. 2 bis 4).

19. Ventilvorrichtung nach Anspruch 17 oder 18, dadurch gekennzeichnet, dass die Feder(n) (10; 29, 31; 44, 46; 74) des/der Ventilkörper(s) (9; 30, 32; 44, 46; 71) jeweils über eine kraftschlüssig mit der Führungsstange (8; 28; 41; 72) verbundene Scheibe (11; 33, 34; 52, 53; 73) an der Führungsstange (8; 28; 41; 72) abgestützt ist/sind.

20. Ventilvorrichtung nach Anspruch 17 oder 18, dadurch gekennzeichnet, dass die Feder (32) des hinteren Ventilkörpers (31A) über eine Scheibe (33) an der Führungsstange (28A) abgestützt ist und dass die Ventilfeder (30A) jedes davor liegenden Ventilkörpers (29) jeweils am dahinter liegenden Ventilkörper (31A) abgestützt ist (Fig. 3).

21. Ventilvorrichtung nach einem der vorhergehenden Ansprüche, dadurch gekennzeichnet, dass der Abstand zwischen den Anschlüssen (3, 4, 5; 23, 24, 25; 48, 49, 50) bzw. den aus dem Ventilraum (70) führenden Hohlräumen (67, 68, 69) nicht gleich gross ist.

22. Ventilvorrichtung nach einem der vorhergehenden Ansprüche, dadurch gekennzeichnet, dass die Kennlinie der Feder(n) nichtlinear ist.

23. Filtereinrichtung für Hauswasseranlagen mit einer Ventilvorrichtung nach einem der Ansprüche 1 bis 21.

24. Hauswasseranlage mit zumindest zwei Wasserbehandlungsgeräten, dadurch gekennzeichnet, dass diese eine Ventilvorrichtung nach einem der Ansprüche 1 bis 21 aufweist.

25. Verwendung einer Ventilvorrichtung nach einem der Ansprüche 1 bis 21 zur sequentiellen Ansteuerung von physikalisch wirkenden Entkalkungsgeräten, insbesondere solchen zum Enthärten von Wasser.
